# EUROPÄISCHE PATENTSCHRIFT

(11) **EP 1 495 284 B1**
(45) Veröffentlichungstag und Bekanntmachung des Hinweises auf die Patenterteilung: **22.12.2010**
(21) Anmeldenummer: 03706597.6
(22) Anmeldetag: 01.03.2003
(51) Int. Cl.: G01B 7/312, G01B 11/10, G01B 21/12

(54) **BERUEHRUNGSLOSES SYSTEM UND VERFAHREN ZUR MESSUNG VON ZENTRIZITAET UND DURCHMESSER**
CONTACTLESS SYSTEM AND METHOD FOR MEASURING CENTRICITY AND DIAMETER
SYSTEME ET PROCEDE SANS CONTACT POUR MESURER LE CENTRAGE ET LE DIAMETRE

(30) Priorität: 08.04.2002 DE 10215432; 03.05.2002 DE 10219848
(43) Veröffentlichungstag der Anmeldung: 12.01.2005
(73) Patentinhaber: ZUMBACH ELECTRONIC AG, CH-2552 Orpund (CH)
(72) Erfinder: STUDER, Urs, Peter, CH-4125 Riehen (CH)
(74) Vertreter: Köster, Hajo
(86) Internationale Anmeldenummer: PCT/EP2003/002117
(87) Internationale Veröffentlichungsnummer: WO 2003/085354

(56) Entgegenhaltungen:
- EP-A- 0 692 697
- CH-A- 667 327
- DE-A- 2 517 709
- US-A- 5 214 376

## Beschreibung

Die Erfindung betrifft ein berührungsloses Zentrizitäts- und Durchmesser-Messsystem mit i) einer optische Messvorrichtung zur Bestimmung des Außendurchmessers und der Lage eines Stranges in einer optischen, senkrecht und quer zur Mittelachse Z einer Messeinrichtung angeordneten Messebene, wobei der Strang einen Leiter und eine diesen isolierende Umhüllung aufweist und in Richtung der Mittelachse Z durch die Messeinrichtung hindurchgezogen wird, ii) einer induktiven Messspulenvorrichtung zur Bestimmung der Lage des Leiters in einer induktiven Messebene, die ebenfalls senkrecht und quer zur Mittelachse Z der Messeinrichtung angeordnet ist, und iii) Mitteln, welche die durch die optische Messvorrichtung bestimmte Lage des Stranges mit der durch die induktive Messspulenvorrichtung ermittelten Lage des Leiters in Beziehung setzen und daraus die Zentnzität des Leiters in der Umhüllung errechnen. Die Erfindung betrifft ebenso ein entsprechendes Verfahren.

Bei dem Strang handelt es sich insbesondere um ein Kabel. Bei der Herstellung von derartigen Strängen und insbesondere Kabel wird die Umhüllung bzw. der Mantel normalerweise durch Extrusion auf den Leiter aufgebracht. Dieser Leiter kann aus einer Schicht oder aus mehreren Schichten zusammengesetzt sein, die konzentrisch um den Leiter verlaufen.

Die Erfindung wird im folgenden aus Gründen der einfacheren Darstellbarkeit anhand von Kabeln und der Herstellung von Kabeln erläutert, wobei der Begriff "Kabel" stellvertretend für alle Arten von Strängen steht, die einen elektrisch leitenden Kern oder Träger aufweisen. Für Kabel ist es wesentlich, dass diese einerseits den erforderlichen Durchmesser besitzen, um die geforderten elektrischen Eigenschaften aufzuweisen und um insbesondere ausreichend zu isolieren. Andererseits ist es von Bedeutung, dass der Leiter zentrisch im Kabelmantel bzw. in der Umhüllung verläuft. Dies ist insbesondere bei Datenkabeln und Antennenkabeln von Bedeutung.

Es sind schon zahlreiche Vorrichtungen bekannt, mit denen entweder der Außeridurchmesser eines Kabels oder die Zentrizität des Leiters in einem Kabel bestimmt werden können. So ist beispielsweise in der DE 25 17 709 eine Vorrichtung zur Messung und Regelung der Wanddicke von isolierten Strängen beschrieben. Bei dieser Vorrichtung wird die Exzentrizität mit Hilfe einer Induktionsmessung ermittelt. Dazu sind im Umfangsabstand um das Kabel herum angeordnete induktive Sensoren vorgesehen, die auf das Magnetfeld ansprechen, das ein im Leiter induzierter Strom erzeugt. Ferner sind bei dieser bekannten Vorrichtung zwei optische Anordnungen vorhanden, die um 90° zueinander versetzt sind, so dass ihre Messachsen senkrecht aufeinander stehen. Mit Hilfe dieser optischen Anordnungen lässt sich die Lage des Kabelmantels bestimmen.

Diese bekannte Vorrichtung besitzt einen Messkopf, der beispielsweise horizontal und vertikal verstellbar ist und der in seiner Lage so eingestellt werden kann, dass der Leiter zentrisch zum Messkopf verläuft.

Außerdem ist aus der CH 667 327 A5 ein Verfahren und eine Vorrichtung zur Prüfung der Wandstärke einer isolierenden Schicht bekannt. Diese Vorrichtung weist einerseits eine Messvorrichtung zur Bestimmung des Außendurchmessers und andererseits eine Messvorrichtung zur Ermittlung der Wandstärke der Isolation auf. Die dabei ermittelten Messwerte werden einem Rechner zugeführt, welcher die Exzentrizität des Leiters und die Wandstärke errechnet. Bei der Messvorrichtung zur Messung der Wandstärke der Isolation des Kabels handelt es sich um ein induktiv arbeitendes Gerät, welches auf dem Wirbelstromprinzip basiert und den Abstand vom Sensor zur Oberfläche des Leiters ermittelt. Ein derartiges Messprinzip wird im Rahmen der vorliegenden Unterlagen als "passiv" bezeichnet. Dabei wird der Leiter des Kabels nicht mit Strom beaufschlagt. Bei den Messspulen handelt es sich dann um aktive Spulen, welche symmetrisch zur Mittelachse der Vorrichtung angeordnet und Bestandteil eines Schwingkreises sind und den durch den im Leiter erzeugten Wirbelstrom messen, woraus sich der Abstand zur Leiteroberfläche ergibt.

Bei dieser bekannten Vorrichtung sind die beiden genannten Messvorrichtungen in axialer Richtung und somit in Richtung des Leiters voneinander beabstandet. Damit weisen auch die optische Messebene und die induktive Messebene einen Abstand auf.

Als aktive Messung bzw. als aktives Messsystem wird im Rahmen der vorliegenden Unterlagen eine solche bzw. ein solches bezeichnet, bei dem im Leiter ein Strom induziert wird, beispielsweise ein hochfrequenter Wechselstrom mit Hilfe eines Induktors. Die magnetischen Feldlinien des dadurch erzielten Feldes laufen konzentrisch um den Leiter bzw. die Leiterachse und werden mit passiven Spulen detektiert.

Eine weitere Vorrichtung zur Bestimmung der Position eines Leiters relativ zur Außenfläche einer extrudierten Umhüllung ist aus der EP-A-0 612 975 bekannt. Es wird dort betont, für die elektrischen und mechanischen Eigenschaften eines extrudierten Kabels sei es wichtig, dass der Leiter entlang der zentralen Achse des Kabels platziert sei. Zur Bestimmung der Exzentrizität wird bei dieser bekannten Vorrichtung eine Kombination aus einer optischen Vorrichtung zur Bestimmung der Lage des Kabels in einer Messebene und einer induktiv arbeitenden Vorrichtung zur Bestimmung der Position des Leiters in der Isolierung bzw. der Umhüllung zur Anwendung gebracht.

Die optische Vorrichtung weist zwei Lichtquellen auf, die in einem Winkel von 90° zueinander angeordnet sind und Licht senkrecht zur Längsachse des Kabels senkrecht auf dieses und somit einerseits in Richtung der X-Achse und andererseits in Richtung der Y-Achse emittieren. Den Lichtquellen gegenüber liegt jeweils eine Lichtmessvorrichtung. Auf diese Weise können die Lage des Kabels in der Messebene und auch der Außendurchmesser des zu vermessenden Kabels bestimmt werden.

Des weiteren sind zwei Paare von Induktionsspulen vorhanden, die beidseits des Kabels angeordnet sind. Ein Spulenpaar ist dabei in Richtung der X-Achse und das andere in Richtung der Y-Achse angeordnet. Wird nun der Leiter des zu vermessenden Kabels mit einem Wechselstrom beaufschlagt, dann wird ein magnetisches Feld erzeugt, das durch die Induktionsspulen gemessen wird. Sind die in den Induktionsspulen gemessenen Ströme gleich stark, dann befindet sich der Leiter in der Mitte zwischen den Spulenpaaren und somit in zentraler Lage.

Da aus der optischen Messung die Lage der Außenmantelfläche des Kabels und aus der induktiven Messung die Lage des Leiters bekannt sind, kann rechnerisch die Zentrizität des Leiters errechnet werden.

Auch bei dieser bekannten Vorrichtung liegen die Messebenen der optischen Messung und der induktiven Messung axial hintereinander. Werden somit die optische Messung und die induktive Messung zu irgendeinem Zeitpunkt gleichzeitig gemessen, dann beziehen sich die dabei ermittelten Werte auf unterschiedliche und axial voneinander beabstandete Messebenen und somit unterschiedliche Stellen bzw. Orte des extrudierten Kabels. Zudem treten große Messfehler auf, wenn die Leiterachse bezüglich der Mittelachse der Vorrichtung verkippt ist bzw. damit einen Winkel einschließt.

Weitere Vorrichtungen der hier in Rede stehenden Art sind beschrieben in CH-A 542 426, .CH-A 683 370 und CH-A 463 124. Ein neueres Verfahren zur Messung des Durchmessers eines Stranges ist in der DE-A 197 57 067 erläutert.

Aus der EP-A-0 692 697 ist ein berührungsloses Messsystem bekannt, mit dem bei Kabeln die Exzentrizität des Leiters mit Hilfe einer induktiven Messspulenvorrichtung und der Außendurchmesser mit einer optischen Messvorrichtung bestimmt werden. Die optisch ermittelte Lage des Kabels wird mit der induktiv ermittelten Lage des Leiters in Beziehung gesetzt. Beide Vorrichtungen sind in einem gemeinsamen Gehäuse integriert.

Die US-A-5 214 376 offenbart eine optische und induktive Messeinheit, die in einem gemeinsamen Messkopf zur Bestimmung des Außendurchmessers und der Exzentrizität von Kabeln integriert ist.

Aufgabe der vorliegenden Erfindung ist es, ein Messsystem und ein entsprechendes Verfahren bereitzustellen, mit dem der Außendurchmesser eines Stranges und insbesondere eines Kabels und die Exzentrizität des Leiters dieses Stranges/Kabels auf einfache Weise gleichzeitig für denselben Ort des Stranges bestimmt werden können.

Gelöst wird diese Aufgabe durch eine Vorrichtung sowie ein Verfahren gemäß der Lehre der Patentansprüche 1 bzw. 10.

Bei dem erfindungsgemäßen Messsystem wird der zu vermessende Strang bzw. das zu vermessende Kabel, das insbesondere aus einer Extrusionsanlage stammt, im wesentlichen in Richtung der Mittelachse durch die erfindungsgemäße Messeinrichtung hindurchgezogen. Diese Einrichtung stellt insbesondere eine Art Messjoch dar, auf das später eingegangen wird.

Der Leiter des Kabels weist eine isolierende Umhüllung auf. Ist der Leiter zentrisch in der Umhüllung angeordnet und wird das zu vermessende Kabel in Richtung der Mittelachse sowie mittig in der Messvorrichtung bzw. in dem Messjoch geführt oder dadurch hindurchgezogen, dann fällt die Leiterachse mit der Mittelachse der erfindungsgemäßen Messeinrichtung zusammen. Mit der erfindungsgemäßen Messeinrichtung sind jedoch auch dann verlässliche und genaue Werte zu ermitteln, wenn beispielsweise die Leiterachse, sei sie nun zentrisch im Kabel oder nicht, parallel zu Mittelachse verschoben ist oder wenn die Leiterachse bezüglich der Mittelachse verkippt ist. Nähere diesbezügliche Erläuterungen finden sich weiter unten.

Zur Bestimmung des Außendurchmessers, der in einer optischen Messebene ermittelt wird, dient eine optische Messvorrichtung. Die Messebene dieser optischen Messvorrichtung ist dabei senkrecht und quer zur Mittelachse der Messeinrichtung angeordnet. Mit anderen Worten, die Mittelachse der Messeinrichtung und auch die Leiterachse bildet die Normale zu dieser optischen Messebene.

Ferner wird durch die optische Messeinrichtung die Lage der Umhüllung (genauer der Außenmantelfläche) und damit die Lage des Kabels in der optischen Messebene bestimmt. Mit anderen Worten, es kann ermittelt werden, ob die zentrische Längsachse des Kabels mit der Mittelachse der optischen Messeinrichtung zusammenfällt und somit durch den zentralen Messpunkt S verläuft oder diesbezüglich verschoben ist. Die Längsachse des Kabels ist dabei von der Leiterachse des Kabels zu unterscheiden, denn letztere kann exzentrisch in der Umhüllung angeordnet sein und fällt dann nicht mit der Mittelachse der Messeinrichtung zusammen, selbst wenn die Längsachse des Kabels und die Mittelachse der Messeinrichtung zusammenfallen.

Die optische Messvorrichtung kann beliebiger und bekannter Art sein. Es sind verschiedene derartige Messvorrichtungen bekannt und in den eingangs genannten Druckschriften beschrieben. Die Art dieser optischen Messvorrichtung ist somit nicht kritisch. Die optische Messung kann beispielsweise mit einem Laserscanner, mit einer CCD-Kamera oder auf fotometrischer Basis erfolgen.

Zweckmäßigerweise ist diese optische Messvorrichtung derart ausgestaltet, dass die Lage und der Durchmesser des Kabels in einer X-Richtung und einer Y-Richtung ermittelt wird, wobei diese beiden Richtungen insbesondere senkrecht zueinander verlaufen bzw. aufeinander stehen und einen Winkel von 90° einschließen.

Im letzteren Fall besteht die optische Messvorrichtung zweckmäßigerweise aus zwei optischen Messsystemen, die durch gemeinsame Triggerung der Messung (Shutter, Blitz, Auslesen der CCD oder ähnlichem) synchronisiert werden. Ferner ist eine Synchronisation der beiden optischen Messsysteme durch eine Synchronregelung von optischen Scannern oder durch Verwendung eines gemeinsamen Scanners (Polygonalspiegel) und einem mit Spiegel entsprechend entfaltetem Strahlengang möglich. Für eine optische Messung mittels Laserstrahlen kann für jede Messachse bzw. für die X- und die Y-Richtung je ein Laser mit einem optischen Scanner Anwendung finden.

Es ist auch möglich, die optische Messung mit mehr als zwei Messsystemen, beispielsweise drei Messsystemen, durchzuführen. In letzterem Fall bilden die Messachsen bzw. Messrichtungen dann einen Winkel von vorzugsweise 60°. Alle diese Messrichtungen bzw. Messachsen liegen dabei in einer Messebene.

Vorzugsweise weist die erfindungsgemäße Vorrichtung jedoch eine optische Messvorrichtung mit zwei Lichtquellen auf, die um insbesondere 90° zueinander versetzt angeordnet sind und von denen Licht in der optischen Messebene auf den Strang emittiert wird, das auf der dem Strang gegenüberliegenden Seite von jeweils einem der Lichtquelle zugeordnetem Sensor detektiert wird.

Die erfindungsgemäße Vorrichtung ist ferner mit einer induktiven Messspulenvorrichtung zur Bestimmung der Lage des Leiters des Kabels in der induktiven Messebene ausgerüstet. Die Messebene dieser induktiven Messspulenvorrichtung, die hier auch als induktive Messebene bezeichnet wird, verläuft ebenfalls senkrecht und quer zur Mittelachse der Messeinrichtung und damit auch zur Leiterachse.

Die erfindungsgemäße Vorrichtung zeichnet sich nun dadurch aus, dass die Messspulen der Messspulenvorrichtung paarweise bezüglich der optischen Messebene angeordnet sind. Dadurch werden unterschiedliche Feldstärken ermittelt, und zwar einerseits vor der optischen Messebene und andererseits nach der optischen Messebene. Die ermittelten Feldstärken werden derart in Beziehung gesetzt, dass sich die Feldstärke in der sogenannten induktiven Messebene ergibt, die mit der optischen Messebene unter Bildung einer gemeinsamen aktiven Messebene M zusammenfällt, die gleichzeitig die optische Messebene bildet.

Mit dem Ausdruck "paarweise" wird zum Ausdruck gebracht, dass ein Paar von Messspulen und somit zwei Messspulen vorhanden sind. Eine dieser Messspulen befindet sich vor der aktiven Messebene und die andere symmetrisch dazu auf der anderen Seite und somit hinter der aktiven Messebene M.

Bei der paarweisen Anordnung der Messspulen werden die von den einzelnen Messspulen eines Paares gemessenen Feldstärken durch Verrechnung in Beziehung gebracht. Mit anderen Worten, durch die Verrechnung wird die Feldstärke in einer Art virtuellen Messebene ermittelt. Es wird nämlich nicht die konkrete Feldstärke in dieser virtuellen Ebene, welche der optischen Messebene entspricht und die gemeinsame aktive Messebene M darstellt, konkret gemessen. Vielmehr wird die Feldstärke in dieser virtuellen Messebene rechnerisch ermittelt.

Nach einer bevorzugten Ausführungsform haben alle Messspulen der Messspulenvorrichtung die gleiche Wirkfläche und vorzugsweise die gleiche Form und Fläche. Unter Wirkfläche wird dabei der Flächeninhalt derjenigen Fläche verstanden, der von den Feldlinien senkrecht durchdrungen werden. Ist die von der Wicklung eines Messspule aufgespannten Fläche senkrecht zu den Feldlinien angeordnet, dann entspricht der Flächeninhalt der aufgespannten Fläche der Wirkfläche. Ist die Anordnung hingegen nicht senkrecht und durchdringen die Feldlinien die aufgespannte Fläche in einem Winkel kleiner 90°, dann ist die Wirkfläche kleiner als der Flächeninhalt. Besitzen beispielsweise zwei Messspulen gleiche Wirkfläche, dann ist die in diesen beiden Messspulen induzierte Spannung bei gleicher Feldstärke vom Betrag her die gleiche. Im Falle eines Messspulenpaares wird mit einer Messspule dieser beiden Messspulen eine Messung vor und mit der anderen eine Messung nach der Messebene M vorgenommen.

Das erfindungsgemäße Messsystem besitzt ferner Mittel, welche die mit der optischen Messvorrichtung ermittelten Daten bzw. bestimmte Lage des Kabels mit der durch die induktive Messspulenvorrichtung ermittelten Daten zur Bestimmung der Lage des Leiters in Beziehung zu setzen. Zu diesen Mitteln zählt beispielsweise eine Rechnereinheit bekannter Natur.

Aus den bei der optischen Messung erhaltenen Daten wird die Lage des Kabels in der aktiven Messebene M und damit auch die Lage der Außenmantelfläche der Umhüllung errechnet. Auch der Durchmesser des Kabels wird dabei bestimmt. Mit anderen Worten, die Lage der Querschnittsfläche des Kabels in der Messebene wird optisch ermittelt. Durch die bei der induktive Messung erhaltenen Daten wird die Lage des Leiters des Kabels in der aktiven Messebene M ermittelt. Da die Lage der Querschnittsfläche in der Messebene bekannt ist, kann man durch rechnerische Einbeziehung der Daten der induktiven Messung rechnerisch ermitteln, wo sich der Leiter in der Querschnittsfläche befindet. Liegt der Leiter bei einem beispielsweise runden Kabel im Zentrum der kreisförmigen Querschnittsfläche, dann ist der Leiter zentrisch angeordnet. Ist der Leiter nicht im Zentrum, dann ist die Leiterachse bezüglich der zentrischen Längsachse des Kabels verschoben, und es liegt Exzentrizität vor.

Das oben Gesagte gilt auch dann, wenn das Kabel und somit dessen Längsachse seitlich zur Mittelachse der Messeinrichtung versetzt ist oder dazu verkippt ist. Durch die optische Messeinrichtung wird die Lage und die Ausdehnung der Querschnittsfläche in der Messebene ermittelt, woraus sich auch ergibt, ob die Längsachse durch den zentralen Messpunkt S in der Messebene verläuft oder nicht. Letzteres ist im übrigen bevorzugt, da dann die Messgenauigkeit am größten ist und eine Linearität der Messung gegeben ist. Daher sind die optische Messvorrichtung und/oder die induktive Messspulenvorrichtung verschiebbar ausgestaltet. Die Verschiebung erfolgt derart, dass das zu vermessende Kabel bei der Vermessung möglichst durch den zentralen Messpunkt verläuft.

Zum erfindungsgemäßen Messsystem gehören ferner die für die Messung und Behandlung der gemessen Daten erforderliche elektronische Bauteile wie Verstärker, Wandler etc. Derartige Bauteile sind jedoch bekannt und bedürfen daher keiner weiteren Erläuterungen.

Zweckmäßigerweise werden die optische Messung und die induktive Messung zum gleichen Zeitpunkt durchgeführt. Mit anderen Worten, beide Messungen beziehen sich auf dieselbe Stelle bzw. denselben Ort des zu vermessenden Kabels.

Die optische Messung und die induktive Messung erfolgen vorzugsweise in Echtzeit. Die erhaltenen Messergebnisse werden dabei in Echtzeit verarbeitet.

Die induktive Messung mit Hilfe der induktiven Messspulenvorrichtung kann passiver oder aktiver Art sein. Vorzugsweise erfolgt die induktive Messung jedoch in Form einer aktiven Messung. Dazu weist die erfindungsgemäße Vorrichtung eine Einrichtung zur Induktion eines hochfrequenten Wechselstroms in dem Leiter des zu vermessenden Kabels auf.

Bei der induktiven Messung laufen die Feldlinien des durch den Strom im Leiter induzierten Feldes konzentrisch um diesen Leiter. Um die Feldstärke dieses Feldes zu ermitteln, kann man Messspulen einsetzen, deren Wicklung und deren Wirkfläche in etwa in einer Ebene liegt, die senkrecht zu den Feldlinien verläuft und von diesen senkrecht durchdrungen wird. Für die Messung in einer Ebene können zweckmäßigerweise zwei Spulen zum Einsatz kommen, die symmetrisch zur Mittelachse Z der Messeinrichtung angeordnet sind.

Im Prinzip ist die induktive Messung in einer Ebene ausreichend. Gleiches gilt für die optische Messung.

Für eine induktive Messung in einer Ebene ist es erforderlich, die Feldstärke auf zwei Seiten von der Mittelachse Z zu messen, und zwar einmal vor der Messeben M und einmal danach. Dies kann dadurch erreicht werden, dass für die Messung auf einer Seite der Messeben M zwei separate Messspulen pro Ebene eingesetzt werden, die symmetrisch zur Mittelachse Z verteilt angeordnet sind. Auf der anderen Seite der Messebene M sind dann nochmals zwei derartige separate Messspulen vorhanden.

Ferner kann dies durch Einsatz von Messspulen erreicht werden, die hier als Differenzspulen bezeichnet werden. Mit Differenzspulen werden solche bezeichnet, deren Wirkfläche, die auch als wirksame Messfläche bezeichnet werden kann, bezüglich der Mittelachse Z hälftig aufgeteilt. Diese beiden Flächen liegen vorzugsweise in einer Ebene, so dass die eine Fläche die Feldstärke auf der einen Seite der Mittelachse Z vermisst und die andere Fläche die Feldstärke auf der anderen, gegenüberliegenden Seite der Mittelachse Z vermisst. Das Gesamtmessfeld wird somit durch die Mittelachse Z halbiert.

Auch eine Messung mit drei separaten Messpulen ist möglich, wobei diese Messspulen dann vorzugsweise sternförmig und in Winkeln von 120° angeordnet sind. Die von den Spulen gemessenen Feldstärken werden dann derart in Beziehung gebracht, dass sich die Lage des Leiters in der induktiven Messebene ergibt.

Vorzugsweise wird die induktive Messung in zwei Ebenen durchgeführt, die hier als X-Ebene und Y-Ebene bezeichnet werden. Diese X- und Y-Ebenen schließen einen Winkel ein, der vorzugsweise 90° beträgt. Die X- und Y-Ebenen stehen zudem senkrecht auf der Messebene M bzw. schneiden diese senkrecht. Damit wird quasi der Raum aufgespannt. Die Schnittlinie dieser X- und Y-Ebenen bildet die Mittelachse Z der Messeinrichtung und verläuft durch den zentralen Messpunkt S in der aktiven Messebene M.

Natürlich ist es auch möglich, die Zahl der Ebenen, in denen eine induktive Messung durchgeführt wird, weiter zu erhöhen, beispielsweise auf drei Ebenen, die zweckmäßigerweise einen Winkel von 60° einschließen. Auch wenn dadurch die Messgenauigkeit vergrößert wird, ist üblicherweise eine induktive Messung (und auch eine optische Messung) in zwei Ebenen bzw. Richtungen ausreichend.

Im Prinzip kann für die induktive Messung eine beliebige Zahl von separaten Messspulen eingesetzt werden.

Vorzugsweise sind die separaten Messspulen für die induktive Messung gleichmäßig in Umfangsrichtung um die Mittelachse Z verteilt.

Nach einer weiteren Ausführungsform umfasst die Messspulenvorrichtung der erfindungsgemäßen Vorrichtung vier Messspulenpaare. Vier separate Messspulen dieser Messspulenpaare sind in der X-Ebene angeordnet, während weitere vier separate Messspulen in der Y-Ebene angeordnet sind. Dabei liegt eine Messspule eines Messspulenpaares vor der Messebene M und die andere Messspule des Messspulenpaares hinter der Messebene M. Die. Messspulen sind symmetrisch zur aktiven Messebene M und vorzugsweise auch zur Messachse Z angeordnet, so dass sich eine Punktsymmetrie bezüglich des zentralen Messpunktes S ergibt.

In diesem Fall werden die von einer Messspule ermittelte Feldstärke (bzw. Spannung) und die mittels der zweiten Messspule dieses Messspulenpaares ermittelte Feldstärke (bzw. Spannung) addiert. Gleiches gilt für das Messspulenpaar auf der anderen Seite der Mittelachse Z. Die daraus gebildete Differenz zeigt die für die Messebene M errechnete Feldstärke an. Die Wirkflächen aller vier Messspulen sollten dabei gleich sein.

Nach einer weiterhin bevorzugten Ausführungsform werden erfindungsgemäß Differenzspulen zum Einsatz gebracht, deren Wirkfläche in der X-Ebene oder in der Y-Ebene liegt. Auch in diesem Fall ist es möglich, die induktive Messung in mehr als zwei Ebenen, bzw. in drei oder vier Ebenen durchzuführen. Entsprechend muß dann die Anzahl der Differenzspulen erhöht werden.

Nach einer bevorzugten Ausführungsform besitzen die Differenzspulen eine Wicklung, von denen sich Abschnitte auf beiden Seiten der Mitteachse Z sowie parallel dazu erstrecken, und zwar entweder in der X-oder in der Y-Ebene. Diese parallelen Abschnitte sind mittels konzentrisch zur Mittelachse Z verlaufenden Verbindungsbogen verbunden. Da sich diese Verbindungsbogen in Richtung der Feldlinien erstrecken, sind sie wirkungsneutral. Als Wirkfläche dient somit nur diejenige Fläche, die zwischen den beiden parallelen Abschnitten der Wicklung aufgespannt ist.

Es ist im übrigen nicht zwingend, dass die sich zwischen zwei Verbindungsbogen erstreckenden Abschnitte parallel zur Mittelachse Z verlaufen. Vielmehr ist es denkbar, diese Abschnitte bogenförmig in der X-oder Y-Ebene verlaufen zu lassen, wobei natürlich die beiden Wirkflächen beidseits der Mittelachse Z gleich groß sein müssen.

Die erfindungsgemäße Vorrichtung weist weiterhin bevorzugt Mittel auf, um entweder die optische Messvorrichtung und/oder die induktive Messspulenvorrichtung verschieben und justieren zu können. Zu diesen Mittels zählt beispielsweise ein Positioniersystem inklusive Positionsantriebe und eine entsprechende Steuerung. Ferner sind Mittel zur Spannungsmessung, zur Phasenbestimmung etc. und zur Verarbeitung ermittelter Daten, beispielsweise eine Rechnereinheit vorhanden. All dies ist jedoch bekannter Natur und bedarf keiner weiteren Erläuterung.

Gegenstand der Erfindung ist auch ein Verfahren gemäß der Lehre der Verfahrensansprüche.

Die Erfindung wird im folgenden anhand der beiliegenden Zeichnungen näher erläutert, welche bevorzugte Ausführungsformen zeigen und die Erfindung skizzenhaft und nicht maßstabsgetreu wiedergeben. Von diesen Zeichnungen zeigen
- Figur 1: eine Systemübersicht der erfindungsgemäßen Vorrichtung,
- Figur 2: das Aufbauprinzip einer Messeinrichtung in Form eines Messjochs gemäß einer ersten Ausführungsform der Erfindung,
- Figur 3: die Anordnung der Messspulen der Messspuleneinrichtung und der verschiedenen Ebenen in schematischer und perspektivischer Darstellung bei der ersten Ausführungsform gemäß der Figur 2,
- Figur 4: eine Aufsicht auf die X-Ebene der Figur 3 in vereinfachter Darstellung mit einem Kabel, dessen Leiterachse mit der Mittelachse der erfindungsgemäßen Vorrichtung zusammenfällt,
- Figur 5: eine der Figur 4 analoge Ansicht, wobei allerdings die Leiterachse bezüglich der Mittelachse verkippt ist,
- Figur 6: eine Prinzipdarstellung einer Messspulenvorrichtung in perspektivischer Ansicht gemäß einer zweiten Ausführungsform, bei der die Messspulen Differenzspulen sind,
- Figur 7: eine Prinzipdarstellung in perspektivischer Ansicht einer einzelnen Messspule gemäß Fig. 6 in der X-Ebene,
- Figur 8: der Verlauf der Feldlinien in der X-Ebene gemäß Figur 7 bei einem Leiter, in dem Strom induziert wird.

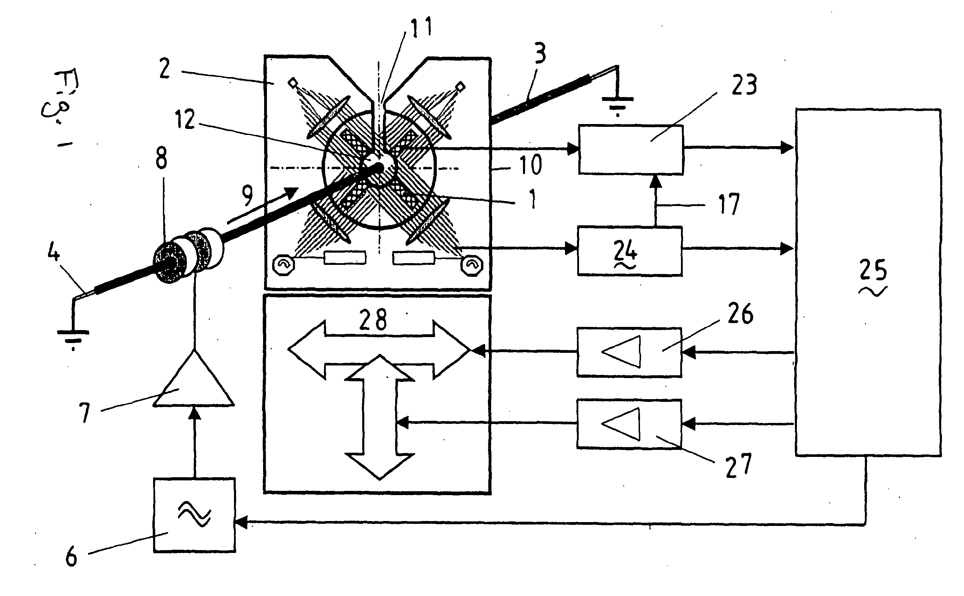

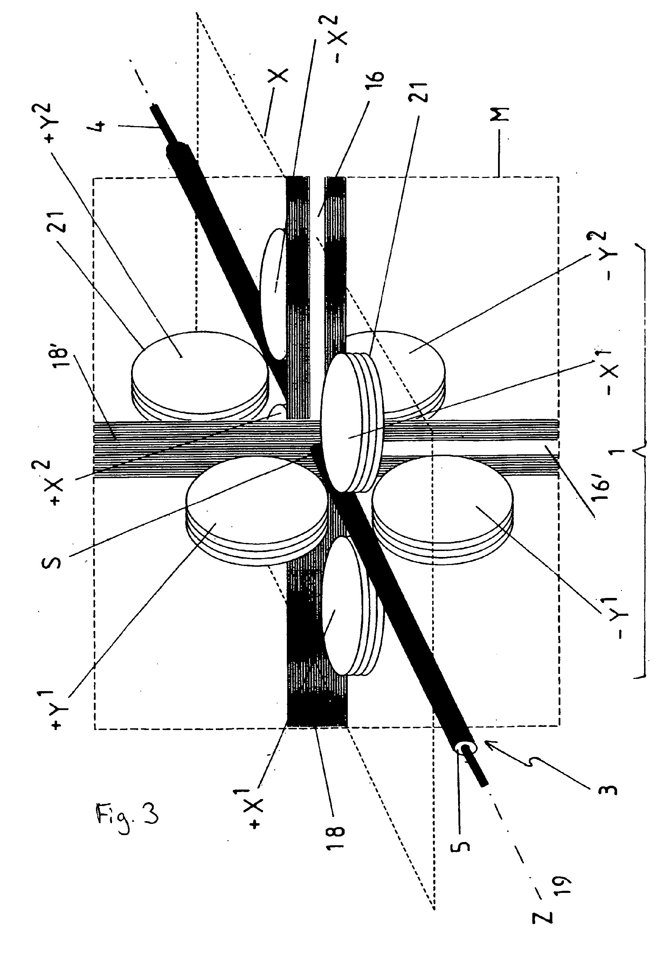

Bei der erfindungsgemäßen Vorrichtung wird, wie dies beispielsweise in der Figur 1 gezeigt ist, ein Kabel 3 durch eine Messeinrichtung in Form eines Messjoches 2 hindurchgeführt. Dieses Kabel 3 weist, wie beispielsweise aus der Figur 3 ersichtlich ist, einen zentrischen Leiter 4 auf, der von einer Umhüllung 5 aus einem isolierenden Material umgeben ist. Ein derartiges Kabel 3 wird üblicherweise durch Extrudieren hergestellt. Die erfindungsgemäße Vorrichtung bzw. das Messjoch 2 kann in die laufende Produktionslinie für die Herstellung dieses Kabels 3 integriert werden und nach der Extrusionsdüse entweder vor dem üblicherweise eingesetzten Kühlbad oder auch dahinter positioniert werden. In dem Kabel 3 wird mit Hilfe eines Oszillators 6, beispielsweise einem 160 KHZ Oszillator, und einem Verstärker 7 (beispielsweise 60 Watt) sowie eines Induktors 8 ein Strom 9 induziert.

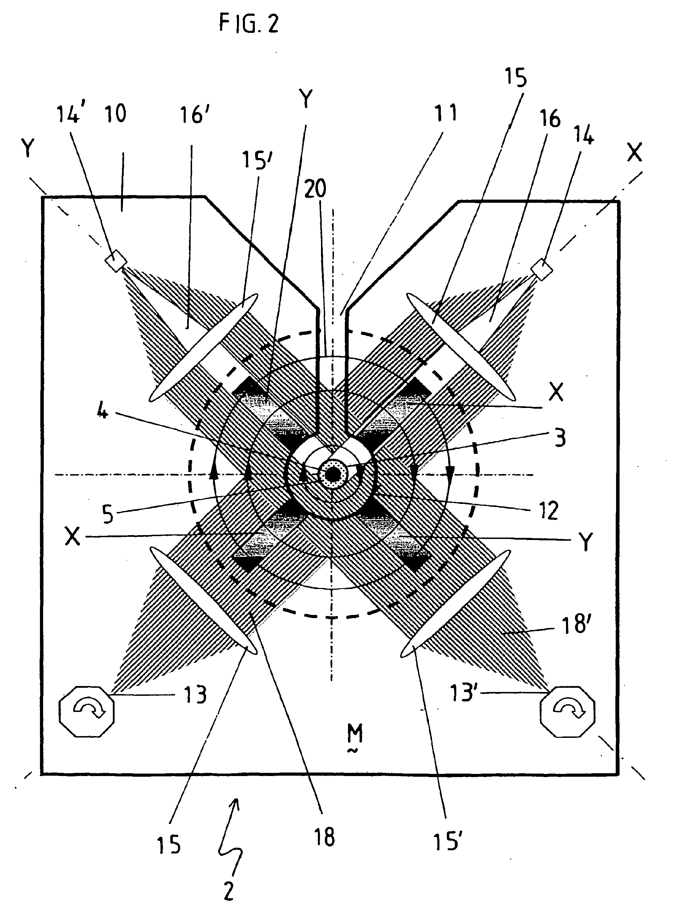

Das in der Figur 2 näher dargestellte Messjoch 2 besitzt ein Gehäuse 10 und ist in etwa scheibenförmig bzw. tellerförmig ausgestaltet. Mittig in diesem Gehäuse findet sich eine zentrale Öffnung 12, durch die das Kabel 3 hindurchgezogen werden kann, das durch einen Schlitz 11 in diese Öffnung 12 eingeführt wurde. Die Mittelachse Z verläuft senkrecht zum Gehäuse 10 und somit senkrecht zur Papierebene der Figur 2; das Gehäuse 10 liegt dabei in etwa in der Papierebene. Die zentrale Öffnung 12 ist im wesentlichen kreisförmig ausgebildet.

Das Gehäuse 10 hat in Richtung der Mittelachse Z eine Ausdehnung von einigen Zentimetern. Im Inneren des Gehäuses 10 sind die optische Messvorrichtung und die induktive Messspulenvorrichtung angeordnet.

Bei der in der Fig. 2 gezeigten Ausführungsform sind in dem Gehäuse 10 zwei optische Messvorrichtungen 13, 14; 13', 14' vorhanden, die jeweils eine Lichtquelle 13, 13' und einen Empfänger 14, 14' aufweisen.

Bei der dargestellten Ausführungsform stellen die Lichtquellen 13, 13' einen Laserscanner mit polygonalem Spiegel dar. Die davon fächerförmig emittierten, Laserstrahlen 18, 18' werden durch eine Linse 15, 15' parallel ausgerichtet. Die parallelen Laserstrahlen 18, 18' treffen dann auf das zu vermessende Kabel 3, das natürlich von den Laserstrahlen 18, 18' nicht durchdrungen wird, so dass hinter dem Kabel 3 ein Schatten 16, 16' entsteht. Die Laserstrahlen 18, 18' werden dann im weiteren Verlauf durch eine zweite Linse 17, 17' auf die Empfänger 14, 14' gebündelt, mit dem die Breite des Schattens 16, 16' und somit einerseits die Lage des Kabels 3 in der Messebene M und auch der Durchmesser ermittelt werden können.

Für eine derartige optische Messung können die verschiedensten bekannten Vorrichtungen Anwendung finden Die hier näher erläuterte Messvorrichtung stellt nur eine von vielen Möglichkeiten dar.

Bei der in der Figur 2 gezeigten Ausführungsform vermisst die optische Messvorrichtung 13, 14 die Lage der Umhüllung 5 des Kabels 3 in X-Richtung, während die andere optische Messvorrichtung 13', 14' die Lage in Y-Richtung bestimmt. Daraus ergbit sich auch der Außendurchmesser. Die X- und Y-Richtung bilden dabei einen Winkel von 90° bzw. stehen senkrecht aufeinander. Die Papierebene der Figur 2 stellt die Messebene M dar, in der sich die Laserstrahlen 18, 18' erstrecken. Man kann sich das Messjoch 2 auch derart vorstellen, dass die Papierebene der Figur 2 das Gehäuse 10 in etwa in zwei Hälften unterteilt, von denen sich eine oberhalb der Papierebene und die andere unterhalb der Papierebene befindet.

In der Figur 2 sind auch Messspulenpaare X, Y angedeutet, deren Lage und Ausgestaltung in der Fig. 3 dargestellt ist. Jedes Messspulenpaar +X, -X, +Y, -Y besteht aus zwei separaten Messspulen +X¹, +X²; -X¹, -X²; +Y¹, +Y²; -Y¹, -Y², die symmetrisch bezüglich der Messebene M in einer die Mittelachse Z aufweisenden Ebene (entweder X oder Y) liegen. So sind bei der in der Fig. 3 dargestellten Ausführungsform zwei Messspu lenpaare +X, -X vorhanden, die in der Ebene X liegen, wobei diese Ebene X senkrecht auf der Messebene M steht. Eine Spule +X¹ des Messspulenpaares +X liegt dabei vor der Messebene M, während die andere Messspule +X² dieses Messspulenpaares +X nach der Messebene M angeordnet ist. Dem Messspulenpaar +X liegt dabei bezüglich der Mittelachse Z das Messspulenpaar -X in dieser X-Ebene symmetrisch gegenüber. Letzteres Messspulenpaar -X weist eine separate Messspule -X¹ vor der Mittelebene M und eine weitere separate Messspule -X² nach der Messebene M auf.

Analoges gilt für die Messspulenpaare +Y und -Y. Eine separate Messspule +Y¹ bzw. -Y¹ der beiden Messspulenpaare +Y und -Y liegt vor der Messebene M, während die zweite separate Messspule +Y² bzw. -Y² nach der Messebene M sowie symmetrisch dazu angeordnet ist. Die Messspulenpaare +Y und -Y liegen im übrigen in der Y-Ebene, die in der perspektivischen Darstellung der Fig. 3 nicht gezeigt ist. Die Messebene M stellt dabei die Ebene dar, in der sich auch die Laserstrahlen 18, 18' erstrecken.

Die X-Ebene und die Y-Ebene stehen dabei senkrecht zueinander (sie schließen somit zwischen sich einen Winkel von 90° ein) und stehen auch senkrecht zur Messebene M. Die Mittelachse Z verläuft dabei in der Schnittlinie der X-Ebene mit der Y-Ebene. Bei optimaler Ausrichtung eines Kabels 3 mit zentrischem Leiter 4 fällt auch die Leiterachse 19 mit der Mittelachse Z und damit mit der Schnittlinie der X-Ebene mit der Y-Ebene zusammen. Die in der Fig. 3 gezeigten Messspulen sind bei dieser Ausführungsform zum zentralen Messpunkt S punktsymmetrisch angeordnet. Sie besitzen zudem gleiche Form und Größe und damit eine gleiche Wirkfläche bzw. Messfläche.

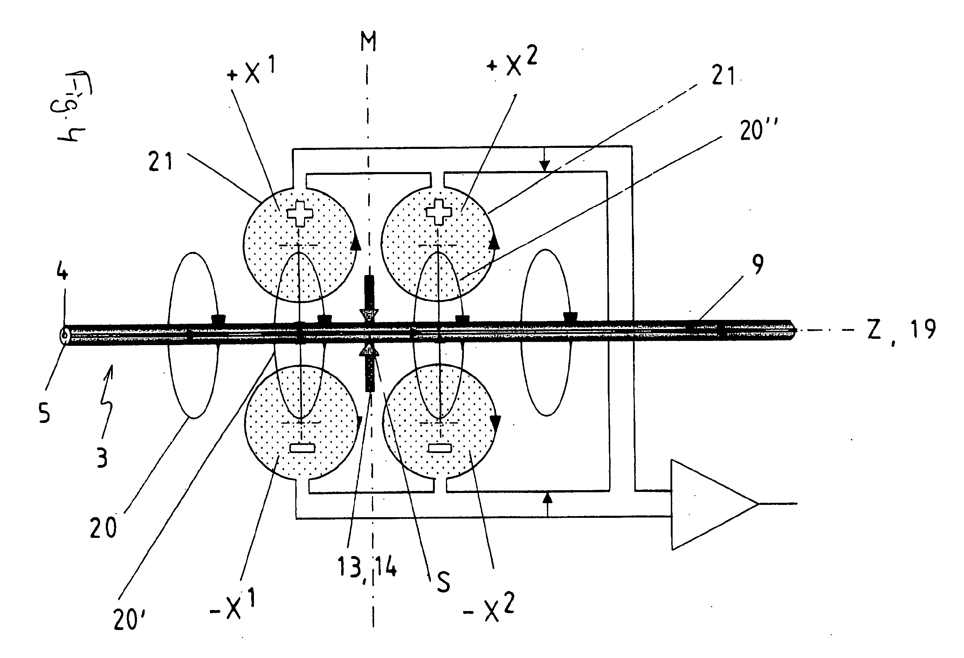

Zur weiteren Erläuterung wird auf die Fig. 4 verwiesen, welche eine Aufsicht auf die X-Ebene der Fig. 3 zeigt, wobei die "Verhältnisse" zum besseren Verständnis schematisch dargestellt sind. Durch den in dem Leiter 4 des Kabels 3 induzierten Strom 9 wird ein Feld mit konzentrisch um das Kabel 3 verlaufenden Feldlinien 20 erzeugt. Der Außendurchmesser des Kabels 3 und somit der Umhüllung 5 wird durch die optischen Messvorrichtungen 13, 14; 13', 14' in der Messebene M ermittelt. Alle dort gezeigten separaten Messspulen liegen in der X-Ebene. Mit anderen Worten, die Wicklungen 21 dieser Messspulen +X¹, +X², -X¹,-X² befinden sich in etwa in dieser X-Ebene, wobei diese Messspulen natürlich auch je nach ihrer Dicke und Ausgestaltung eine gewisse Ausdehnung in der Y-Richtung besitzen. Die Wicklungen 21 der Messspulen +X¹ und +X² des Messspulenpaares +X auf der einen Seite des Kabels 3 und auch die entsprechenden Wicklungen 21 der Messspulen -X¹ und -X² des anderen Messspulenpaares -X auf der anderen Seite des Kabels 3 sind jeweils in Reihe geschaltet. Die Messspulenkombination +X¹, -X¹ misst die Stärke der Feldlinien 20' vor der Messebene M, während die Messspulenkombination +X², -X² die Stärke der Feldlinien 20" nach der Messebene M bestimmt. Mit anderen Worten, es wird der Wirkabstand des eingeschlossenen Feldes von der Leiterachse 19 zur Spulenmitte ermittelt.

Für das Messspulenpaar +X wird die Spannung als Summe der in den einzelnen Spulen +X¹ und +X² induzierten Teilspannungen ermittelt. Gleiches gilt für das Messspulenpaar -X. Von diesen beiden Spannungen wird die Differenz ermittelt. Fällt beispielsweise die Leiterachse 19 exakt mit der Mittelachse Z, welche die Symmetrieachse für die Messspulenkombination +X¹-X¹ bzw. +X², -X² bildet, zusammen, dann messen die Messspulen +X¹ und -X¹ die Feldstärke vor der Messebene M, während die Messspulen +X² und -X² die Feldstärke hinter der Messebene M ermitteln. Da die Messspulenpaare +X und -X symmetrisch zur Messebene M angeordnet sind und da die wie oben beschriebene Differenz ermittelt wird, ist als aktive Messebene für die induktive Messspulenvorrichtung die Messebene M anzusehen, die auch die Messebene für die optische Messvorrichtung darstellt.

Für die erfindungsgemäße Vorrichtung ist es wichtig, dass der zentrale Messpunkt S in der Messebene M liegt und somit die Messebene der optischen Messvorrichtung mit der aktiven Messebene der induktiven Spulenvorrichtung zusammenfällt. Dazu ist es erforderlich, die erfindungsgemäße Vorrichtung zu justieren. Zu diesem Zweck wird ein nackter Leiter, der keine isolierende Umhüllung aufweist, exakt entlang der Mittelachse Z ausgerichtet. Befinden sich die Messspulen der Messspulenpaare an ihrem Soll-Ort, wobei die Form und Fläche der einzelnen Messspulen gleich ist, dann müsste die Differenzspannung Null sein. Ist die Messspannung ungleich Null, dann kann dies beispielsweise dadurch bedingt sein, dass die beiden vor und hinter der Messebene M liegenden Messspulen eines Messspulenpaares +X, -X, +Y, -Y nicht symmetrisch zur Messebene M liegen. Es ist dann erforderlich, die Position der induktiven Messspulenvorrichtung bezüglich der Position der optischen Messvorrichtung zu verändern, bis die Differenzspannung Null ist.

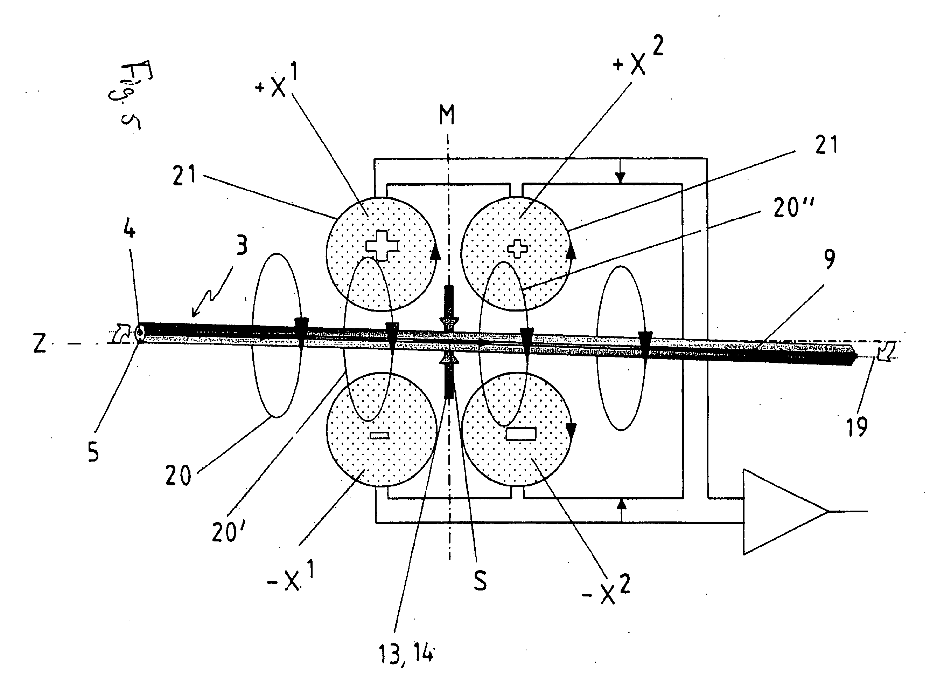

Zur Feststellung, ob der zentrale Messpunkt S exakt in der Messebene M liegt, wird bei der Justierung der nackte Leiter bezüglich der Mittelachse Z verkippt, so dass sich die Mittelachse Z und die Leiterachse 19 in der Messebene der optischen Messvorrichtung schneiden. Befindet sich bei dieser Konstellation der zentrale Messpunkt S in der Messebene der optischen Messvorrichtung, dann ist auch in diesem Falle die Differenzspannung Null; weitere diesbezügliche Einzelheiten werden nachstehend im Zusammenhang mit der Erläuterung der Fig. 5 beschrieben. Ist die Differenzspannung hingegen ungleich Null, muß die optische Messvorrichtung bezüglich der induktiven Messspulenvorrichtung (oder vice versa) derart verschoben werden, dass die Differenzspannung Null wird.

Der einzige Unterschied zwischen den in den Figuren 4 und 5 gezeigten Ansichten besteht darin, dass bei der Fig. 5 das Kabel 3 bezüglich der Mittelachse. Z verkippt ist, jedoch derart, dass der Leiter 4 dieses Kabels 3 durch den zentralen Messpunkt S in der Messebene M verläuft. Auch hier ist die Differenzspannung Null, sofern der Leiter 19 zentrisch in dem Kabel 3 bzw. dessen Umhüllung 4 angeordnet ist. Der Grund dafür liegt darin, dass durch die gewählte Anordnung die Feldstärkenverhältnisse in der aktiven Messebene und nicht etwa vor der Messebene M mittels der Messspulenkombination +X¹, -X¹ bzw. hinter der Messebene M mittels der Messspulenkombination +X² und -X² ermittelt werden. Es ist somit nicht erforderlich, den zu vermessenden Leiter derart durch die erfindungsgemäße Messvorrichtung zu führen, dass die Leiterachse 19 exakt mit der Mittelachse Z zusammenfällt. Die erfindungsgemäße Vorrichtung ist somit wesentlich fehlertoleranter, da sich sowohl die optische als auch die induktive Messung auf die aktive Messebene M beziehen und das Kabel 3 daher für beide Messungen in der selben Ebene erfolgt.

Wünscht man, dass die X-Richtung und die Y-Richtung der optischen Messung in der X-Ebene und der Y-Ebene der induktiven Messung durchgeführt wird, dann sind die Ausführungsformen nach den Figuren 3 und 4 zu bevorzugen.

Es ist übrigens nicht unbedingt erforderlich, wenngleich bevorzugt, dass die X- und Y-Ebene für die induktive Messspulenvorrichtung und die X-Richtung und Y-Richtung für die optische Messvorrichtung senkrecht aufeinander stehen. Diese Winkel können prinzipiell einen beliebigen Wert annehmen.

Ferner ist es auch möglich, die optische Messung in mehr als zwei Richtungen vorzunehmen, beispielsweise in drei oder vier Richtungen, wobei diese natürlich alle in der Messebene M erfolgen. So ist es beispielsweise möglich den Außendurchmesser des Kabels in drei Richtungen optisch zu vermessen, wobei diese Richtungen vorzugsweise einen Winkel von 60° bzw. 45° miteinander bilden.

Analoges gilt für die induktive Messung. So ist es beispielsweise möglich, die in den Figuren 4 und 5 gezeigten vier Messspulenpaare durch sechs Messspulenpaare der gleichen Ausgestaltung zu ersetzen, wobei die einzelnen Messspulen dann in Ebenen angeordnet sind, die vorzugsweise einen Winkel von 60° miteinander bilden. Natürlich schneiden sich dann alle diese drei Ebenen in der Mittelachse Z und stehen senkrecht zur Messebene M.

Nach dem eingangs beschriebenen Justieren der erfindungsgemäßen Vorrichtung kann diese zur Vermessung von extrudierten Kabeln eingesetzt werden. Sobald die Leiterachse 19 des zu vermessenden Kabels 3 nicht mehr durch den zentralen Messpunkt S verläuft, wird die Differenzspannung ungleich Null. Dies ist beispielsweise dann der Fall, wenn das Kabel 3 als solches zwar durch den zentralen Messpunkt S geführt wird (dies ist mit Hilfe der optischen Messvorrichtung ermittelbar), der Leiter 4 des Kabels 3 jedoch nicht mehr darin zentrisch angeordnet ist.

Die Zentrizität des Leiters 4 im Kabel 5 kann auch dann ermittelt werden, wenn das Kabel 5 als solches nicht exakt durch den zentralen Messpunkt S geführt wird, denn letzterer Umstand ist mit Hilfe der optischen Messvorrichtung feststellbar. Für einen solchen Fall müsste die induktive Messspulenvorrichtung dann eine bestimmte Differenzspannung anzeigen. Differiert die gemessene Differenzspannung von der Soll-Differenzspannung, dann kann dies rechnerisch ausgeglichen und dadurch die Exzentrizität bzw. Zentrizität des Leiters 3 im Kabelmantel 5 ermittelt werden. Für eine möglichst hohe Messgenauigkeit ist es jedoch bevorzugt, dass entweder die optische Messvorrichtung oder die induktive Messspulenvorrichtung hinsichtlich ihrer Position derart veränderbar und justierbar sind, dass das Kabel 3 wieder durch den zentralen Messpunkt S verläuft. Derartige Einstell- und Justiermöglichkeiten sind aus dem Stand der Technik bekannt.

Bei allen in den Figuren gezeigten Ausführungsformen handelt es sich um solche, bei denen die induktive Messung auf einer aktiven Messung beruht. Durch den Strom 9 wird ein Feld erzeugt, dessen Feldlinien 20, 20', 20" konzentrisch um den Leiter 4 umlaufen. Die durch die Wicklung 21 der Spulen aufgespannte Ebene verläuft dabei senkrecht zu diesen Feldlinien. Mit anderen Worten, diese aufgespannte Ebene liegt in etwa in der X- bzw. Y-Ebene. Für eine passive Messung ist es erforderlich, die Ebene der Messspulen derart zu verändern, dass sie in etwa tangential zum Kabel verläuft.

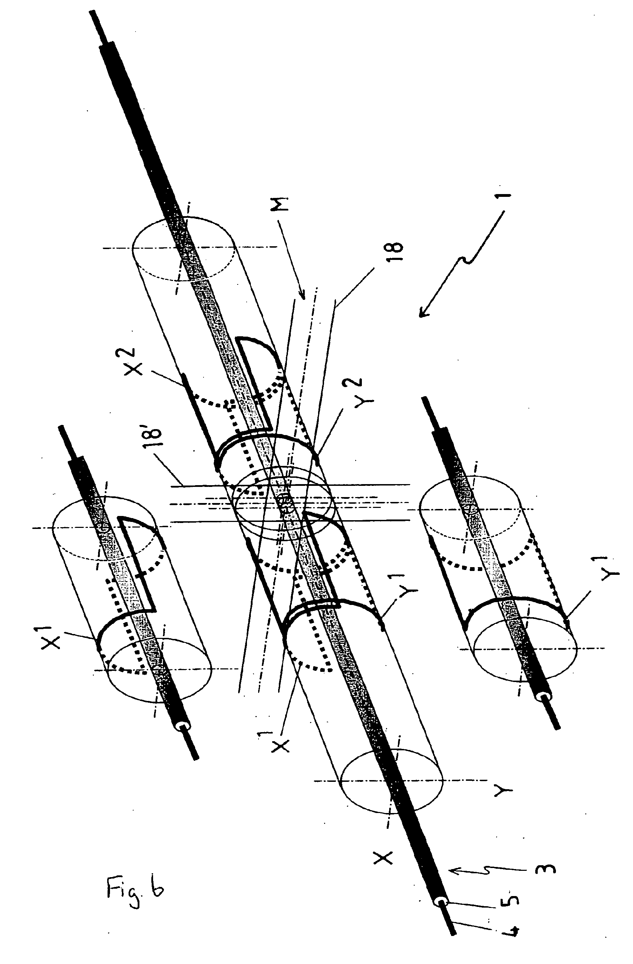

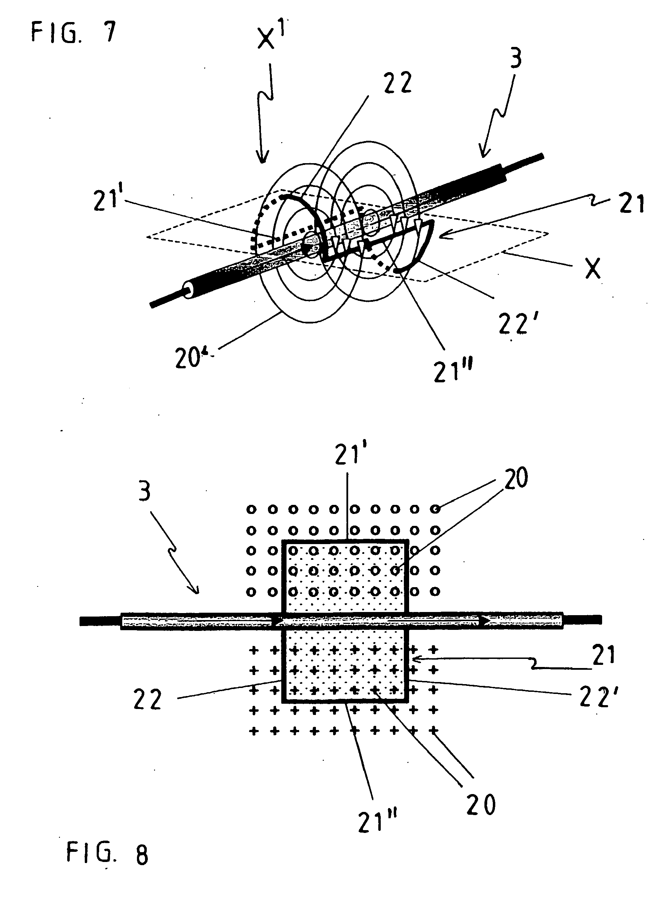

Eine weitere Ausführungsform der erfindungsgemäßen Vorrichtung ist in den Figuren 6 und 7 gezeigt, bei denen es sich um Prinzipdarstellungen in perspektivischer Ansicht handelt. Das optische Messsystem entspricht demjenigen der anderen Ausführungsformen und ist in diesen Figuren nur angedeutet. Der eigentliche Unterschied besteht in der Art der Messspulen, bei denen es sich um sogenannte Differenzspulen handelt.

Auch bei dieser Ausführungsform sind Messspulenpaare X, Y vorhanden, die beidseits der Messebene M angeordnet sind. In der Mitte der Figur 6 ist eine Gesamtschau mit insgesamt vier Differenzspulen X¹, Y¹, X²; Y² dargestellt, während oberhalb davon eine einzelne Differenzspule X¹ und unterhalb davon eine einzelne Differenzspule Y¹ gezeigt ist.

Weitere Einzelheiten bezüglich der Differenzspule X¹ sind aus der Figur 7 ersichtlich. Die dort gezeigte Differenzspule X¹ besitzt Wicklungsabschnitte 21', 21 ", die sich beidseits des Leiters 4 bzw. Kabels 3 sowie parallel dazu in der X-Ebene erstrecken. Am axialen Ende eines parallelen Wicklungsabschnittes 21' erstreckt sich ein Verbindungsbogen 22 konzentrisch zum Leiter 4 und den Feldlinien 20 zum anderen Ende des nächsten parallelen Wicklungsabschnitts 21 ". Dieser Verbindungsbogen ist wirkungsneutral. Die Wicklung 21 setzt sich dann wieder parallel zum Kabel 3 in entgegengesetzter Richtung und daher in Gegenrichtung zum Wicklungsabschnitt 21' auf der dem Leiter gegenüberliegenden Seite fort. Auch dieser parallele Abschnitt erstreckt sich in der X-Ebene. Am Ende dieses parallelen Abschnitts geht die Wicklung 21 dann wieder in einen Verbindungsbogen parallel zu den Feldlinien 20 über. Dort kann sich dann die nächste Wicklung der beschriebenen Art anschließen. Die beiden Verbindungsbogen 22 und 22' bilden in etwa einen Vollkreis, können sich jedoch auch nur auf einer Seite von der Mittelachse Z befinden, da sie wirkungsneutral sind.

Eine derartige Differenzspule X¹ vermisst in etwa das in der Figur 8 gezeigte, mit starken schwarzen Linien umrandete Feld in der Ebene X; mit (+) sind dabei eintauchende Feldlinien 20 dargestellt, während die kleinen Kreise (°) auftauchende Feldlinien 20 darstellen.

Sind beide Spulenhälften dieser Differenzspule X¹ wirkflächenmäßig gleich groß, dann werden entsprechend der Richtung der Feldlinien 20 entgegengesetzte Spannungen induziert, die sich folglich in der gleichen Spule gegenseitig aufheben, wenn sich die Leiterachse 19 mit der eine Symmetrieachse darstellenden zentrischen Mittelachse Z deckt. Entfernt sich die Leiterachse 19 aus dieser Symmetrieachse, dann wird das Gleichgewicht gestört und es resultiert eine Spannung entsprechend der Differenz der induzierten Teilspannungen in den beiden Spulenhälften +X und -X, und zwar je nach Richtung mit der entsprechenden Phase gegenüber dem induzierten Strom. Das Vorzeichen muss dabei durch Kontrolle der Phase bestimmt werden.

Die Differenzspule X¹ ist dabei, wie man aus der Figur 6 ersieht, auf einer Seite der Messebene M angeordnet. Die damit korrespondierende Differenzspule X² ist der Messebene M gegenüberliegend angeordnet. Letztere vermisst das Feld in der X-Ebene auf der anderen Seite der Messebene M.

Zur Vermessung des Feldes in der Y-Ebene dienen die Differenzspulen Y¹ und Y², von denen eine vor der Messebene M und die andere auf der anderen Seite der Messebene M angeordnet ist. Bei diesen Differenzspulen Y¹ und Y² verlaufen somit die parallelen Abschnitte der Wicklungen 21 in dieser Y-Ebene.

Die von den verschiedenen, oben beschriebenen Messspulen ermittelten Werte werden von einer Elektronik 23 für die induktive Messung verarbeitet und auf eine zentrale Rechnereinheit 25 gegeben. Auch die bei der optischen Vermessung ermittelten Werte werden von einer Elektronik 24 für die optische Messung verarbeitet und auf diesen zentrale Rechnereinheit 25 gegeben. Eine Synchronisation 17 verbindet die Elektronik 23 und mit der Elektronik 24 und stellt die Gleichzeitigkeit aller induktiven und optischen Messungen sicher.

Bereits oben wurde die Vorteilhaftigkeit der Justierung der erfindungsgemäßem Vorrichtung näher erläutert. Um die Messspulenvorrichtung 1 in der X-Ebene und/oder Y-Ebene zu verschieben, ist ein Positioniersystem 28 vorgesehen, mit dessen Hilfe die Messspulenvorrichtung derart verschoben werden kann, dass die Schnittlinie der X-Ebene und Y-Ebene mit der Mittelachse Z zusammenfällt und sich der zentrale Messpunkt S in der Messebene M befindet.

Das Positioniersystem 28 verfügt über Positionsantriebe, welche die Vorrichtung in X- oder in Y-Richtung verschieben können, und wird über Steuerungen 26 und 27 gesteuert, die von der Rechnereinheit 25 angesprochen werden.

Ist das Kabel nicht zentrisch, können die Steuerungen 26 und 27 während der laufenden Vermessung angesprochen werden und die Messvorrichtung mittels des Positioniersystems derart verschoben werden, dass das Kabel möglichst zentrisch durch den zentralen Messpunkt S verläuft.

Es ist auch möglich, ein derartiges Positioniersystem für die Verschiebung der optischen Messeinrichtung vorzusehen.

### Bezugszeichenliste:

- X, Y, +X, -Y, +Y, -Y: Messspulenpaare
- M: Messebene
- Z: Mittelachse der Messeinrichtung
- S: zentraler Messpunkt
- 1: Messspulenvorrichtung
- 2: Messjoch
- 3: Kabel
- 4: Leiter
- 5: Umhüllung
- 6: Oszillator
- 7: Verstärker
- 8: Induktor
- 9: Strom
- 10: Gehäuse
- 11: Schlitz
- 12: zentrale Öffnung
- 13, 13': Lichtquelle
- 14, 14': Empfänger
- 15, 15': Linse
- 16, 16': Schatten
- 17: Synchronisation
- 18, 18': Laserstrahlen
- 19: Leiterachse
- 20, 20', 20": Feldlinien
- 21/21', 21": Wicklung/Wicklungsabschnitt
- 22, 22': Verbindungsbogen
- +X¹, -X¹, +X², -X², +Y¹, -Y¹, +Y², -Y² =: separate Messspulen
- X¹, X², Y¹, Y²: Differenzspulen
- 23: Elektronik für induktive Messung
- 24: Elektronik für optische Messung
- 25: zentrale Rechnereinheit
- 26: Steuerung für Positionierssystem
- 27: Steuerung für Positioniersystem
- 28: Positioniersystem

## Patentansprüche

1. Berührungsloses Zentrizitäts- und Durchmesser-Messsystem mit
i) einer optischen Messvorrichtung (13, 13', 14, 14') zur Bestimmung des Außendurchmessers und der Lage eines Stranges (3) in einer optischen, senkrecht und quer zur Mittelachse Z einer Messeinrichtung (2) angeordneten Messebene, wobei der Strang (3) einen Leiter (4) und eine diesen isolierende Umhüllung (5) aufweist und in Richtung der Mittelachse Z durch die Messeinrichtung (2) hindurchgezogen wird,
ii) einer induktiven Messspulenvorrichtung (1) zur Bestimmung der Lage des Leiters (3) in einer induktiven Messebene, die ebenfalls senkrecht und quer zur Mittelachse Z der Messeinrichtung (2) angeordnet ist, und
iii) Mitteln, welche die durch die optische Messvorrichtung (1) bestimmte Lage des Stranges (3) mit der durch die induktive Messspulenvorrichtung (1) ermittelten Lage des Leiters (4) in Beziehung setzen und daraus die Zentrizität des Leiters (4) in der Umhüllung (5) errechnen,
**dadurch gekennzeichnet,**
**dass** die Messspulen (-X¹, -X², +X¹, +X², -Y¹, -Y², +Y¹, +Y² bzw. X¹, X², Y¹, Y²) der Messspulenvorrichtung (1) paarweise bezüglich der optischen Messebene angeordnet sind und einerseits die Feldstärke vor der optischen Messebene und andererseits die Feldstärke nach der optischen Messebene ermitteln und dass Mittel vorgesehen sind, welche die so ermittelten Feldstärken derart in Beziehung setzen können, dass sich daraus die Feldstärke in einer aktiven induktiven Messebene ergibt, die mit der optischen Messebene unter Bildung einer gemeinsamen aktiven Messebene M zusammenfällt.

2. Vorrichtung nach Anspruch 1,
**dadurch gekennzeichnet,**
**dass** jeweils eine optische Messung in einer zur Mittelachse Z senkrechten X-Richtung und in einer ebenfalls zur Mittelachse Z senkrechten Y-Richtung erfolgt und die X- und Y-Richtungen einen Winkel einschließen, der insbesondere 90° beträgt.

3. Vorrichtung nach Anspruch 2,
**dadurch gekennzeichnet,**
**dass** die optische Messvorrichtung (13, 13', 14, 14'), zwei Lichtquellen (13, 13'), von denen eine (13) Licht (18) in der X-Richtung und die andere (13') Licht (18') in der Y-Richtung auf den Strang (3) emittiert, und auf der dem Strang (3) gegenüberliegenden Seite jeweils einen Lichtsensor (14, 14') aufweist, der das von der gegenüberliegenden Lichtquelle (13, 13') emittierte Licht (18, 18') detektiert.

4. Vorrichtung nach Anspruch 1, 2 oder 3,
**dadurch gekennzeichnet,**
**dass** alle Messspulen (-X¹, -X², +X¹, +X², -Y¹, -Y², +Y¹, +Y² bzw. X¹, X², V¹, Y²) der Messspulenvorrichtung (1) gleiche Form und Wirkfläche besitzen.

5. Vorrichtung nach einem der vorhergehenden Ansprüche,
**dadurch gekennzeichnet,**
**dass** eine Einrichtung (6, 7, 8) zur Induktion eines hochfrequenten Wechselstroms in dem Leiter (4) vorhanden ist und sich die Wirkflächen der Messspulen in einer X-Ebene oder einer Y-Ebene erstrecken, sich die X- und Y-Ebenen unter Einschluss eines Winkels von insbesondere 90° schneiden und senkrecht auf der Messebene M stehen, und sich die Mittelachse Z in der Schnittlinie der X-Ebene mit der Y-Ebene erstreckt.

6. Vorrichtung nach Anspruch 5,
**dadurch gekennzeichnet,**
**dass** die Messspulenvorrichtung (1) vier Messspulenpaare (+X, -X; +Y, -Y) umfasst, vier separate Messspulen (+X¹, +X², -X¹, -X²) in der X-Ebene angeordnet und vier separate Messspulen (+Y¹, +Y², -Y¹, -Y²) in der Y-Ebene angeordnet sind, eine separate Messspule (+X¹; -X¹ bzw. +Y¹; -Y¹) eines Messspulenpaares (+X; -X; +Y; -Y) vor der Messebene M und die andere separate Messspule (+X²; -X² bzw. +Y²; -Y²) dieses Messspulenpaares (+X; -X; +Y; -Y) hinter der Messebene M angeordnet ist und die separaten Messspulen (+X¹, +X², -X¹, -X², +Y¹, +Y², -Y¹, -Y²) symmetrisch zur aktiven Messebene M und zur Mittelachse Z angeordnet sind.

7. Vorrichtung nach Anspruch 5,
**dadurch gekennzeichnet,**
**dass** die Messspulenvorrichtung vier Messpulen in Form von Differenzspulen (X¹, X², Y¹, Y²) aufweist und die Differenzspulen (X¹, X²) bzw. (Y¹, Y²) jeweils ein Messspulenpaar bilden, deren Wirkfläche hälftig bezüglich der Mittelachse Z aufgeteilt ist.

8. Vorrichtung nach Anspruch 7,
**dadurch gekennzeichnet,**
**dass** die Wicklung dieser Differenzspulen (X¹, X², Y¹, Y²) auf beiden Seiten der Mittelachse Z sowie parallel dazu verlaufende Abschnitte (21, 21'), die mittels konzentrisch zur Mittelachse Z verlaufenden Verbindungsbogen (22, 22') verbunden sind und sich die parallelen Abschnitte (21, 21') der Wicklung entweder in der Y-Ebene oder in der X-Ebene erstrecken.

9. Vorrichtung nach einem der Ansprüche 5 bis 8,
**dadurch gekennzeichnet,**
**dass** die X-Richtung der optischen Messung in der X-Ebene der induktiven Messung und die Y-Richtung der optischen Messung in der Y-Ebene der induktiven Messung liegen.

10. Verfahren zur berührungslosen Bestimmung einerseits des Außendurchmessers eines Stranges, der einen Leiter und eine diesen isolierende Umhüllung aufweist, und andererseits der Zentrizität des Leiters in der Umhüllung, bei dem der Strang durch eine Messeinrichtung hindurchgezogenen wird, wobei
i) die Lage und der Außendurchmesser des Stranges in einer optischen Messebene, die senkrecht und quer zur Mittelachse Z der Messeinrichtung angeordnet ist, optisch ermittelt wird,
ii) die Lage des Leiters in einer induktiven Messebene, die ebenfalls senkrecht und quer zur Mittelachse Z der Messeinrichtung angeordnet ist, induktiv ermittelt wird und
iii) die durch die optische Messung bestimmte Lage des Stranges mit der durch die induktive Messung ermittelten Lage des Leiters in Beziehung gesetzt werden und daraus die Zentrizität des Leiters in der Umhüllung errechnet wird,
**dadurch gekennzeichnet,**
**dass** einerseits die Feldstärken vor der optischen Messebene und andererseits die Feldstärken nach der optischen Messebene ermittelt und die dabei ermittelten Feldstärken derart in Beziehung gebracht werden, dass sich daraus die Feldstärke in einer aktiven induktiven Messebene ergibt, die mit der optischen Messebene unter Bildung einer gemeinsamen aktiven Messebene M zusammenfällt.

11. Verfahren nach Anspruch 10,
**dadurch gekennzeichnet,**
**dass** die optischen Messung und die induktiven Messung gleichzeitig erfolgen und die dabei gemessenen Daten in Echtzeit verarbeitet werden.

## Claims

1. Contact-free centricity and diameter measurement system having
i) an optical measurement apparatus (13, 13', 14, 14') for determining the outer diameter and the position of a tubular profile (3) in an optical measurement plane arranged perpendicularly and transversely to the centre axis Z of a measurement device (2), wherein the tubular profile (3) comprises a conductor (4) and a sheathe (5) insulating it and is drawn through the measurement device (2) in the direction of the centre axis Z,
ii) an inductive measurement coil apparatus (1) for determining the position of the conductor (3) in an inductive measurement plane which is also orientated perpendicularly and transversely to the centre axis Z of the measurement device (2), and
iii) means which correlate the position of the tubular profile (3) determined through the optical measurement apparatus (1) with the position of the conductor (4) determined through the inductive measurement coil apparatus (1) and calculate therefrom the centricity of the conductor (4) in the sheathe (5),
**characterised in that**
the measurement coils (-X¹, -X², +X¹, +X², -Y¹, -Y², +Y¹, +Y² / X¹, X², Y¹, Y²) of the measurement coil apparatus (1) are arranged in pairs in relation to the optical measurement plane and determine on the one hand the field strength before the optical measurement plane and on the other hand the field strength after the optical measurement plane, and **in that** means are provided which can correlate the thus determined field strengths in such a way that the field strength results therefrom in an active inductive measurement plane which coincides with the optical measurement plane with the formation of a common active measurement plane M.

2. Apparatus according to claim 1,
**characterised in that**
an optical measurement is carried out respectively in an X direction perpendicular to the centre axis Z and in a Y direction likewise perpendicular to the centre axis Z and the X and Y directions are at an angle which is in particular 90°.

3. Apparatus according to claim 2,
**characterised in that**
the optical measurement device (13, 13', 14, 14') comprises two light sources (13, 13'), one of which (13) emits light (18) in the X direction and the other (13') of which emits light (18') in the Y direction onto the tubular profile (3) and comprises on the side lying opposite the tubular profile (3) a respective light sensor (14, 14') which detects the light (18, 18') emitted by the opposing light source (13, 13').

4. Apparatus according to claim 1, 2 or 3,
**characterised in that**
all measurement coils (-X¹, -X², +X¹, +X², -Y¹, -Y², +Y¹, +Y² / X¹, X², Y¹, Y²) of the measurement coil apparatus have the same shape and effective surface.

5. Apparatus according to one of the preceding claims,
**characterised in that**
a device (6, 7, 8) for induction of a high frequency alternating current is present in the conductor (4) and the effective surfaces of the measurement coils extend in an X plane or a Y plane, the X and Y planes intersect at an angle of in particular 90° and are perpendicular on the measurement plane M, and the centre axis Z extends in the intersection line of the X plane with the Y plane.

6. Apparatus according to claim 5,
**characterised in that**
the measurement coil apparatus (1) comprises four measurement coil pairs (+X, -X; +Y, -Y), four separate measurement coils (+X¹, +X², -X¹, -X²) are arranged in the X plane and four separate measurement coils (+Y¹, +Y², -Y¹, -Y²) are arranged in the Y plane, a separate measurement coil (+X¹, -X¹ / +Y¹, -Y¹) of a measurement coil pair (+X; -X; +Y; -Y) is arranged before the measurement plane M and the other separate measurement coil (+X², -X² / +Y², -Y²) of this measurement coil pair (+X; -X; +Y; -Y) is arranged behind the measurement plane M and the separate measurement coils (+X¹, +X², -X¹, -X², +Y¹, +Y², -Y¹, -Y²) are arranged symmetrically to the active measurement plane M and to the centre axis Z.

7. Apparatus according to claim 5,
**characterised in that**
the measurement coil device comprises four measurement coils in the form of differential coils (X¹, X², Y¹, Y²) and the differential coils (X¹, X²) / (Y¹, Y²) respectively form a measurement coil pair, of which the effective surface is divided in halves in relation to the centre axis Z.

8. Apparatus according to claim 7,
**characterised in that**
the winding of these differential coils (X¹, X², Y¹, Y²) comprises sections (21, 21') extending on both sides of the centre axis Z and parallel thereto, said sections (21, 21') being connected by means of curved connecting elements (22, 22') extending concentrically with the centre axis Z, and the parallel sections (21, 21') of the winding extend either in the Y plane or in the X plane.

9. Apparatus according to one of the claims 5 to 8,
**characterised in that**
the X direction of the optical measurement lies in the X plane of the inductive measurement and the Y direction of the optical measurement lies in the Y plane of the inductive measurement.

10. Method for contact-free determination on the one hand of the outer diameter of a tubular profile, which comprises a conductor and a sheathe insulating it, and on the other hand of the centricity of the conductor in the sheathe, wherein the tubular profile is drawn through a measurement device,, wherein
i) the position and the outer diameter of the tubular profile are optically determined in an optical measurement plane which is arranged perpendicularly and transversely to the centre axis Z of the measurement device,
ii) the position of the conductor is inductively determined in an inductive measurement plane which is also arranged perpendicularly and transversely to the centre axis Z of the measurement device and
iii) the position of the tubular profile determined through the optical measurement is correlated with the position of the conductor determined through the inductive measurement and the centricity of the conductor in the sheathe is calculated therefrom,
**characterised in that**
on the one hand the field strengths are determined before the optical measurement plane and on the other hand the field strengths are determined after the optical measurement plane and the field strengths thereby determined are correlated in such a way that the field strength results therefrom in an active inductive measurement plane which coincides with the optical measurement plane with the formation of a common active measurement plane M.

11. Method according to claim 10,
**characterised in that**
the optical measurement and the inductive measurement take place simultaneously and the data thereby measured are processed in real time.

## Revendications

1. Système de mesure sans contact de centrage et de diamètre, ledit système comprenant
i) un dispositif de mesure optique (13, 13', 14, 14') destiné à déterminer le diamètre extérieur et la position d'une barre (3) dans un plan de mesure optique disposé perpendiculairement et transversalement à l'axe médian Z d'un dispositif de mesure (2), la barre (3) comportant un conducteur (4) et une gaine (5) isolant ce conducteur et étant tirée en direction de l'axe médian Z à travers le dispositif de mesure (2),
ii) un dispositif à bobines de mesure par induction (1) destiné à déterminer la position du conducteur (3) dans un plan de mesure par induction qui est également disposé perpendiculairement et transversalement à l'axe médian Z du dispositif de mesure (2), et
iii) des moyens qui mettent en relation la position de la barre (3) déterminée par le dispositif de mesure optique (1) avec la position du conducteur (4) déterminée par le dispositif à bobines de mesure par induction (1), et qui calculent à partir de là le centrage du conducteur (4) dans la gaine (5),
**caractérisé en ce que** les bobines de mesure (-X¹, -X², +X¹, +X², -Y¹, -Y², +Y¹, +Y² resp. X¹, X², Y¹, Y²) du dispositif à bobines de mesure (1) sont disposées par paires par rapport au plan de mesure optique et déterminent d'une part l'intensité de champ en avant du plan de mesure optique et d'autre part l'intensité de champ en arrière du plan de mesure optique et **en ce qu'**il est prévu des moyens qui peuvent mettre en relation les intensités de champ ainsi déterminées de sorte qu'il en résulte des intensités de champ dans un plan actif de mesure par induction qui coïncide avec le plan de mesure optique en formant un plan de mesure actif commun M.

2. Dispositif selon la revendication 1, **caractérisé en ce qu'**une mesure optique est effectuée dans une direction X perpendiculaire à l'axe médian Z et dans une direction Y également perpendiculaire à l'axe médian Z et les directions X et Y forment un angle qui est égal notamment à 90°.

3. Dispositif selon la revendication 2, **caractérisé en ce que** le dispositif de mesure optique (13, 13', 14, 14') possède deux sources lumineuses (13, 13') dont l'une (13) émet de la lumière (18) dans la direction X et l'autre (13') émet de la lumière (18') dans la direction Y sur la barre (3), et **en ce qu'**il possède à chaque fois, du côté opposé à la barre (3), un capteur de lumière (14, 14') qui détecte la lumière (18, 18') émise par la source lumineuse opposée (13, 13').

4. Dispositif selon la revendication 1, 2 ou 3, **caractérisé en ce que** toutes les bobines de mesure (-X¹, - X² +X¹, +X², -Y¹, -Y² +Y¹, +Y² resp. X¹, X², Y¹, Y²) du dispositif à bobines de mesure (1) ont des formes et des surfaces actives identiques.

5. Dispositif selon l'une des revendications précédentes, **caractérisé en ce qu'**un dispositif (6, 7, 8) est présent pour induire un courant alternatif à haute fréquence dans le conducteur (4) et **en ce que** les surfaces actives des bobines de mesure s'étendent dans un plan X ou dans un plan Y, les plans X et Y se coupent en formant un angle notamment de 90° et s'étendent perpendiculairement au plan de mesure et l'axe médian Z s'étend suivant la ligne d'intersection du plan X avec le plan Y.

6. Dispositif selon la revendication 5, **caractérisé en ce que** le dispositif à bobines de mesure (1) comporte quatre paires de bobines de mesure (+X, -X ; +Y, -Y), **en ce que** quatre bobines de mesure séparées (+X¹, +X², -X¹, -X²) sont disposées dans le plan X et quatre bobines de mesure séparées (+Y¹, +Y², -Y¹, -Y²) sont disposées dans le plan Y, **en ce qu'**une bobine de mesure séparée (+X¹ ; -X¹ resp. +Y¹, -Y¹) d'une paire de bobines de mesure (+X ; -X ; +Y ; -Y) est disposée en avant du plan de mesure M et l'autre bobine de mesure séparée (+X² ; -X² resp. +Y² ; -Y²) de cette paire de bobines de mesure (+X ; -X ; +Y ; -Y) est disposée en arrière du plan de mesure M et **en ce que** les bobines de mesure séparées (+X¹, +X², -X¹, -X², +Y¹, +Y², -Y¹, -Y²) sont disposées symétriquement par rapport au plan de mesure actif M et par rapport à l'axe médian Z.

7. Dispositif selon la revendication 5, **caractérisé en ce que** le dispositif à bobines de mesure comporte quatre bobines de mesure se présentant sous la forme de bobines de différence (X¹, X², Y¹, Y²) et les bobines de différence (X¹, X²) resp. (Y¹, Y²) forment à chaque fois une paire de bobines de mesure dont la surface active est divisée en deux moitiés par rapport à l'axe médian Z.

8. Dispositif selon la revendication 7, **caractérisé en ce que** l'enroulement de ces bobines de différence (X¹, X², Y¹, Y²) possède des portions (21, 21') qui s'étendent des deux côtés de l'axe médian Z ainsi que parallèlement à celui-ci et qui sont reliées au moyen d'un arc de liaison (22, 22') s'étendant concentriquement à l'axe médian Z, et **en ce que** les portions parallèles (21, 21') de l'enroulement s'étendent soit dans le plan Y soit dans le plan X.

9. Dispositif selon l'une des revendications 5 à 8, **caractérisé en ce que** la direction X de la mesure optique se trouve dans le plan X de la mesure par induction et la direction Y de la mesure optique se trouve dans le plan Y de la mesure par induction.

10. Procédé de détermination sans contact d'une part du diamètre extérieur d'une barre, qui possède un conducteur et une gaine isolant ce conducteur, et d'autre part du centrage du conducteur dans la gaine, procédé dans lequel la barre est tirée à travers un dispositif de mesure,
i) la position et le diamètre extérieur de la barre étant déterminés par des moyens optiques dans un plan de mesure optique qui est disposé perpendiculairement et transversalement à l'axe médian Z du dispositif de mesure,
ii) la position du conducteur dans un plan de mesure par induction, qui est disposé également perpendiculairement et transversalement à l'axe médian Z du dispositif de mesure, étant déterminée par des moyens inductifs et
iii) la position de la barre déterminée par la mesure optique étant mise en relation avec la position du conducteur déterminée par la mesure par induction et le centrage du conducteur dans la gaine étant calculé à partir de là,
**caractérisé en ce que** l'on détermine d'une part les intensités de champ en avant du plan de mesure optique et l'on détermine d'autre part les intensités de champ en arrière du plan de mesure optique et l'on met en relation les intensités de champ ainsi déterminées de sorte que l'on obtient à partir de là des intensités de champ dans un plan actif de mesure par induction qui coïncide avec le plan de mesure optique en formant un plan de mesure actif commun M.

11. Procédé selon la revendication 10, **caractérisé en ce que** la mesure optique et la mesure par induction sont effectuées simultanément et les données ainsi obtenues par mesure sont traitées en temps réel.
